# EUROPÄISCHE PATENTSCHRIFT

(11) **EP 3 453 542 B1**
(45) Veröffentlichungstag und Bekanntmachung des Hinweises auf die Patenterteilung: **22.04.2020**
(21) Anmeldenummer: 18176390.5
(22) Anmeldetag: 07.06.2018
(51) Int. Cl.: B60C 11/16

(54) **SPIKE**
SPIKE
CRAMPON

(30) Priorität: 08.09.2017 DE 102017215857
(43) Veröffentlichungstag der Anmeldung: 13.03.2019
(73) Patentinhaber: Continental Reifen Deutschland GmbH, 30165 Hannover (DE)
(72) Erfinder: Spechtmeyer, Torben, 30451 Hannover (DE); Kötter, Maik, 30451 Hannover (DE); Schlittenhard, Jan, 30900 Wedemark (DE); Efimov, Konstantin, 30453 Hannover (DE); Voiges, Kristin, 30175 Hannover (DE)
(74) Vertreter: Finger, Karsten

(56) Entgegenhaltungen:
- DE-A1- 2 063 880
- FR-A1- 2 753 134
- JP-A- S5 851 134

## Beschreibung

Die Erfindung betrifft einen Spike zum Verankern in einem Spikeloch eines Laufstreifens eines Fahrzeugluftreifens, mit einem einen Fußflansch und einen Oberflansch aufweisenden Spikekörper und einem aus dem Oberflansch herausragenden Spikepin.

Es ist bekannt und üblich, in Laufstreifen von Fahrzeugluftreifen, welche für den Einsatz unter winterlichen Fahrbedingungen, insbesondere auf Schnee oder Eis, besonders gut geeignet sein sollen, Spikes einzusetzen. Die üblicherweise verwendeten Spikes weisen einen Spikekörper aus Aluminium oder aus Stahl auf, in welchem ein Spikepin aus Hartmetall verankert ist.

Aus der DE 10 2015 223 091 A1 ist ein Spike bekannt, welcher einen in einem Gummimantel befindlichen Spikepin und einen von Gummimaterial umhüllten Fußflansch aufweist. Ein derartiger Spike soll ein geringeres Gewicht, eine hohe Verschleißfestigkeit und einen guten Sitz im Gummimaterial des Laufstreifens aufweisen.

Die DE 2063880 A1 offenbart einen Spike aufweisend einen Kunststoffkörper, aus welchem der Spikepin herausragt. Die FR 2753134 A1 offenbart einen Spikemantel aus synthetischem Material. Die JP S5851134 A offenbart einen Spike, der vor der Einbringung in ein Spikeloch in unvulkanisiertes Material eingebettet wird.

Bei den bekannten Spikes wird der Spikekörper beim Fahren deutlich schneller abgerieben als der aus Hartmetall bestehende Spikepin. Die bisher getroffenen Maßnahmen, um die Abriebbeständigkeit des Spikekörpers zu verbessern, bringen nicht den gewünschten Erfolg. Insbesondere trägt auch Streuspilt, welcher vor allem in den nördlichen Teilen Europas häufig auf Straßen gestreut wird, maßgeblich dazu bei, dass metallische Spikekörper sehr schnell abreiben. Der Abrieb des Spikekörpers reduziert die seitlichen Haltekräfte des Spikes im Laufstreifen und kann zu einem Verkippen des Spikes führen, wodurch die Wirkung der Spikes merkbar beeinträchtigt wird. Die Reduktion der seitlichen Haltekräfte kann sogar zum Verlust der Spikes führen. Die bisher weit verbreiteten Spikekörper aus Aluminium und Stahl tragen ferner maßgebeglich zum Straßenverschleiß bei.

Der Erfindung liegt daher die Aufgabe zugrunde, einen Spike der eingangs genannten Art zur Verfügung zu stellen, welcher die Vorteile von Spikes mit Gummikörpern aufweist, gegenüber diesen jedoch einen geringeren Straßenverschleiß verursacht, im Laufstreifen auf die Lebensdauer des Reifens optimal verankert bleibt und welcher über die Lebensdauer des Reifen über gute Eisgriffeigenschaften verfügt.

Die gestellte Aufgabe wird erfindungsgemäß dadurch gelöst, dass zumindest der Oberflansch des Spikekörpers aus einem thermoplastischen Vulkanisat aus zumindest einem Thermoplast und einem zumindest Elastomer besteht.

Der aus einem thermoplastischen Vulkanisat bestehende Oberflansch zeichnet sich bei Kontakt mit dem Untergrund durch eine sehr gute elastische Verformbarkeit aus, sodass der Straßenverschleiß gegenüber Reifen mit Spikes mit bekannten Spikekörpern deutlich geringer ist. Ferner ist der aus einem thermoplastischen Vulkanisat bestehende Oberflansch gegenüber einem Oberflansch aus Metall und sogar gegenüber einem Oberflansch aus Gummi abriebbeständiger, sodass die Eisgriffeigenschaften erfindungsgemäßer Spikes länger erhalten bleiben. Das Abriebverhalten des thermoplastischen Vulkanisates ist dabei sehr ähnlich zu jener des aus Gummi bestehenden Laufstreifens, sodass der Spikekörper auf ähnliche Weise wie der Laufstreifen abreibt, wodurch ein Verkippen des Spikes wirkungsvoll verhindert wird.

Gemäß einer bevorzugten Ausführungsvariante weist der Spikekörper einen Basisteil auf, welcher den Fußflansch und einen innerhalb des Oberflansches befindlichen Pinhalter aufweist, in welchem der Endabschnitt des innerhalb des Oberflansches befindlichen Abschnittes des Spikepins verankert ist. Mittels solcher Pinhalter wird der Halt der Spikepins im Spike zusätzlich verbessert.

Ferner ist es bevorzugt, wenn der Basisteil des Spikekörpers aus Metall, insbesondere aus Aluminium, besteht. Pinhalter aus Aluminium sind besonders stabil und tragen zu einem guten Halt des Spikepins im Spike bei.

Gemäß einer weiteren bevorzugten Ausführungsvariante ist der Fußflansch von einer Hüllschicht überzogen, welche aus dem thermoplastischen Vulkanisat des Oberflansches besteht. Bevorzugter Weise weist die Hüllschicht, welche den Fußflansch überzieht, eine Dicke von 0,5 mm bis 2,5 mm auf. Nachdem das thermoplastische Vulkanisat eine gute Verbindung zum umgebenden Gummimaterial des Laufstreifens eingeht wird durch diese Maßnahme ein optimaler Halt des Spikekörpers im Laufstreifen unterstützt.

Eine weitere bevorzugte Ausführungsvariante, die diese Vorteile ebenfalls aufweist, ist dadurch gekennzeichnet, dass auch der Fuß flansch aus dem thermoplastischen Vulkanisat besteht.

Es ist bevorzugt, wenn der Thermoplast bzw. die Thermoplaste des thermoplastischen Vulkanisates aus der Gruppe Polyurethan, Polypropylen, Polystyrol, Polyamid und Acrylnitril-Butadien-Styrol-Copolymer stammt bzw. stammen. Diese Thermoplaste verleihen dem thermoplastischen Vulkanisat eine vorteilhafte Härte.

Gemäß einer bevorzugten Ausführungsvariante liegt dem Elastomer des thermoplastischen Vulkanisates eine Kautschukmischung zu Grunde, welche als Kautschuk(e) zumindest einen der Kautschuke aus der Gruppe Naturkautschuk (NR), synthetisches Polyisopren (IR), Polybutadien (BR), Styrol-Butadien-Kautschuk (SBR) und/oder Nitril-Butadien-Kautschuk (NBR) enthält. Es handelt sich daher um Kautschuke, die auch in Kautschukmischungen von Laufstreifen Verwendung finden, wodurch ein gute Verbindung des Spikekörpers zum Gummimaterial des Laufstreifens unterstützt wird..

Die Erfindung betrifft ferner einen Fahrzeugluftreifen mit einem Laufstreifen mit Spikelöchern, welche mit gemäß der Erfindung ausgeführten Spikes versehen sind. Der aus einem thermoplastischen Vulkanisat bestehende Oberflansch verleiht dem Spikekörper eine besonders gute Abriebbeständigkeit. Insbesondere ist die Abriebbeständigkeit des Spikekörpers zu jener des Gummimaterials des Laufstreifens sehr ähnlich, sodass Laufstreifen und Spikekörper in ähnlichem Ausmaß abreiben.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht einer ersten Ausführungsvariante eines Spikes,
Fig. 2 eine Ansicht einer zweiten Ausführungsvariante eines Spikes und
Fig. 3 eine Ansicht einer dritten Ausführungsvariante eines Spikes.

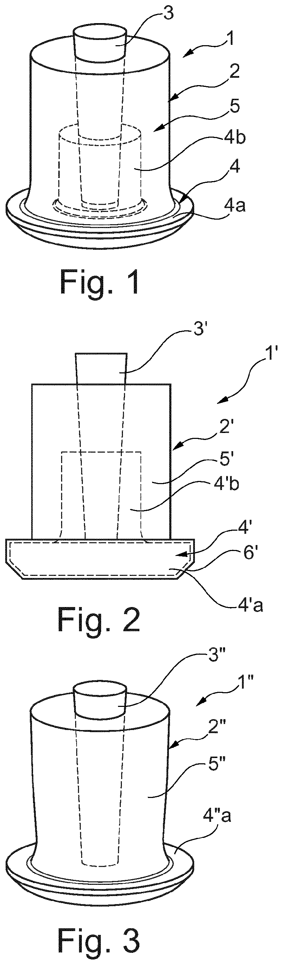

Die in Fig. 1 bis Fig. 3 dargestellten Spikes 1, 1', 1" sind der Einfachheit halber in rotationssymmetrischen Ausführungen dargestellt und setzen sich aus einem Spikekörper 2, 2', 2" und einem Spikepin 3, 3', 3" zusammen. Sowohl die Spikekörper 2, 2', 2" als auch die Spikepins 3, 3', 3" können eine von der rotationssymmetrischen Ausgestaltung abweichende äußere Gestalt aufweisen. Derartige Ausgestaltungen sind aus dem Stand der Technik hinlänglich bekannt.

Der Spikekörper 2 des in Fig. 1 gezeigte Spikes 1 umfasst einen Basisteil 4 und einen Oberflansch 5. Der Basisteil 4 setzt sich aus einem Fußflansch 4a und einem mittig auf diesem befindlichen Pinhalter 4b zusammen, welcher beim gezeigten Ausführungsbeispiel im Wesentlichen kreiszylindrisch ist und einen kleineren Durchmesser als der Fußflansch 4a aufweist. Der Spikepin 3 ist mit einem Abschnitt von oben in eine Ausnehmung des Pinhalters 4b des Basisteils 4 eingesetzt und in diesem verankert und reicht vorzugsweise bis oder nahezu bis zur Oberseite des Fußflansches 4a. Der Oberflansch 5 weist beim gezeigten Ausführungsbeispiel eine im Wesentlichen kreiszylindrische Außenkontur auf, sitzt auf der Oberseite des Fußflansches 4a auf und umgibt hüllenartig den Pinhalter 4b und den aus dem Pinhalter 4b herausragenden Abschnitt des Spikepins 3, welcher mit seinem Endabschnitt den Oberflansch 5 in bekannter Weise überragt.

Der Spikekörper 2' des in Fig. 2 gezeigten Spikes 1' umfasst einen Basisteil 4' und einen Oberflansch 5'. Der Basisteil 4' setzt sich aus einem Fuß flansch 4'a und einem mittig auf diesem befindlichen Pinhalter 4'b zusammen, welcher übereinstimmend zum Pinhalter 4b ausgeführt und mit dem zugehörigen Spikepin 3' versehen ist. Der Fuß flansch 4'a ist von einer Hüllschicht 6' überzogen, welche eine Dicke von insbesondere 0,5 mm bis 2,5 mm aufweist. Der Oberflansch 5' weist beim gezeigten Ausführungsbeispiel eine im Wesentlichen kreiszylindrische Außenkontur auf, sitzt auf der Oberseite der Hüllschicht 6' auf und umgibt hüllenartig den Pinhalter 4'b und einen aus dem Pinhalter 4'b herausragenden Abschnitt des Spikepins 3', welcher mit seinem Endabschnitt den Oberflansch 5'in bekannter Weise überragt.

Der Spikekörper 2" des in Fig. 3 gezeigten Spikes 1" ist einteilig aus einem Fußflansch 4"a und einem Oberflansch 5" ausgeführt. Der Spikepin 3" ist im Oberflansch 5" verankert.

Der Spikepin 3, 3', 3" besteht insbesondere aus einem Hartmetall. Der Basisteil 4, 4' besteht insbesondere aus Aluminium oder aus einem Stahl. Beim Ausführungsbeispiel gemäß Fig. 1 besteht der Oberflansch 5, beim Ausführungsbeispiel gemäß Fig. 2 bestehen der Oberflansch 5' und die Hüllschicht 6' und bei dem in Fig. 3 gezeigten Ausführungsbeispiel besteht der einteilige Spikekörper 2"aus einem thermoplastischen Vulkanisat.

Das thermoplastische Vulkanisat ist ein Blend aus zumindest einem Thermoplast und einem Elastomer, wobei der Thermoplast eine kontinuierliche Phase und das Elastomer eine in dieser fein verteile disperse Phase bildet. In einem thermoplastischen Vulkanisat sind daher Elastomerpartikel vom Thermoplast umgeben. Bei der Herstellung von thermoplastischen Vulkanisaten wird zumindest ein Kautschuk mit einem Thermoplast reaktiv compoundiert, wobei die sich bildende Kautschukmischung phasenselekitv vernetzt wird, sodass sich aus dieser das Elastomer bildet. Die Herstellung erfolgt bevorzugter Weise in einem Scherfeld ("dynamische Vulkanisation"). Der die kontinuierliche Phase bildende Thermoplast ist schmelzbar, sodass das thermoplastische Vulkanisat beispielsweise mittels Spritzguss verarbeitbar sind.

Der Thermoplast ist bzw. enthält insbesondere zumindest einen Thermopalst aus der Gruppe Polyurethan (PU), Polypropylen (PP), Polystyrol (PS), Polyamid (PA) oder Acrylnitril-Butadien-Styrol-Copolymer (ABS). Die Kautschukmischung des Elastomers enthält als Kautschuk zumindest einen der L Kautschuke aus der Gruppe Naturkautschuk (NR), synthetisches Polyisopren (IR), Polybutadien (BR), Styrol-Butadien-Kautschuk (SBR) und Nitril-Butadien-Kautschuk (NBR).

Die Herstellung des Spikes erfolgt durch entsprechendes Umspritzen des Spikepins mit oder ohne Basisteil mit dem durch Erhitzen fließfähigen thermoplastischen Vulkanisat.

Die Erfindung ist auf die beschriebenen Ausführungsbeispiele nicht beschränkt. Insbesondere können der Spikepin, der Oberflansch, der Fußflansch sowie der Pinhalter eine von der beschriebenen und dargestellten Gestalt abweichende Geometrie aufweisen.

### Bezugsziffernliste

- 1, 1' 1": Spike
- 2, 2', 2": Spikekörper
- 3, 3', 3": Spikepin
- 4, 4': Basisteil
- 4a, 4'a, 4"a: Fußflansch
- 4b, 4'b: Pinhalter
- 5, 5', 5": Oberflansch
- 6': Hüllschicht

## Patentansprüche

1. Spike (1, 1', 1") zum Verankern in einem Spikeloch eines Laufstreifens eines Fahrzeugluftreifens, mit einem aus einem Fußflansch (4a, 4'a, 4"a) und einem Oberflansch (5, 5', 5") bestehenden Spikekörper (2, 2', 2") und einem aus dem Oberflansch (5, 5', 5") herausragenden Spikepin (3, 3', 3"),
**dadurch gekennzeichnet,**
**dass** zumindest der Oberflansch (5, 5', 5") des Spikekörpers (2, 2', 2") aus einem thermoplastischen Vulkanisat aus zumindest einem Thermoplast und zumindest einem Elastomer besteht.

2. Spike nach Anspruch 1, **dadurch gekennzeichnet, dass** der Spikekörper (2, 2') einen Basisteil (4, 4') aufweist, welcher den Fußflansch (4a, 4'a) und einen innerhalb des Oberflansches (5, 5') befindlichen Pinhalter (4b, 4'b) aufweist, in welchem zumindest ein Teil des innerhalb des Oberflansches (5, 5') befindlichen Abschnittes des Spikepins (3, 3') verankert ist.

3. Spike nach Anspruch 2, **dadurch gekennzeichnet, dass** der Basisteil (4, 4') des Spikekörpers (2, 2') aus Metall, insbesondere aus Aluminium, besteht.

4. Spike nach einem der Ansprüche 1 bis 3, **dadurch gekennzeichnet, dass** der Fußflansch (4'a) von einer Hüllschicht (6') überzogen ist, welche aus dem thermoplastischen Vulkanisat des Oberflansches (5') besteht.

5. Spike nach Anspruch 4, **dadurch gekennzeichnet, dass** die Hüllschicht (6'), welche den Fuß flansch (4'a) überzieht, eine Dicke von 0,5 mm bis 2,5 mm aufweist.

6. Spike nach Anspruch 1, **dadurch gekennzeichnet, dass** auch der Fußflansch (4"a) aus dem thermoplastischen Vulkanisat besteht.

7. Spike nach einem der Ansprüche 1 bis 6, **dadurch gekennzeichnet, dass** der Thermoplast bzw. die Thermoplaste des thermoplastischen Vulkanisates aus der Gruppe Polyurethan, Polypropylen, Polystyrol, Polyamid und Acrylnitril-Butadien-Styrol-Copolymer stammt bzw. stammen.

8. Spike nach einem der Ansprüche 1 bis 7, dass dem Elastomer des thermoplastischen Vulkanisates eine Kautschukmischung zu Grunde liegt, welche als Kautschuk(e) zumindest einen der Kautschuke aus der Gruppe Naturkautschuk (NR), synthetisches Polyisopren (IR), Polybutadien (BR), Styrol-Butadien-Kautschuk (SBR) und Nitril-Butadien-Kautschuk (NBR) enthält.

9. Fahrzeugluftreifen mit einem Laufstreifen mit Spikelöchern, welche mit Spikes nach einem oder mehreren der Ansprüche 1 bis 8 versehen sind.

## Claims

1. Spike (1, 1', 1") for anchoring in a spike hole of a tread of a pneumatic vehicle tyre, comprising a spike body (2, 2', 2"), consisting of a bottom flange (4a, 4'a, 4"a) and a top flange (5, 5', 5"), and a spike pin (3, 3', 3"), protruding out of the top flange (5, 5',5"),
**characterized**
**in that** at least the top flange (5, 5', 5") of the spike body (2, 2', 2") consists of a thermoplastic vulcanisate made up of at least one thermoplastic and at least one elastomer.

2. Spike according to Claim 1, **characterized in that** the spike body (2, 2') comprises a base part (4, 4'), which comprises the bottom flange (4a, 4'a) and a pin holder (4b, 4'b), which is located within the top flange (5, 5') and in which at least part of the portion of the spike pin (3, 3') that is located within the top flange (5, 5') is anchored.

3. Spike according to Claim 2, **characterized in that** the base part (4, 4') of the spike body (2, 2') consists of metal, in particular of aluminium.

4. Spike according to one of Claims 1 to 3, **characterized in that** the bottom flange (4'a) is covered by an enveloping layer (6'), which consists of the thermoplastic vulcanisate of the top flange (5').

5. Spike according to Claim 4, **characterized in that** the enveloping layer (6') that covers the bottom flange (4'a) has a thickness of 0.5 mm to 2.5 mm.

6. Spike according to Claim 1, **characterized in that** the bottom flange (4"a) also consists of the thermoplastic vulcanisate.

7. Spike according to one of Claims 1 to 6, **characterized in that** the thermoplastic or the thermoplastics of the thermoplastic vulcanisate originates or originate from the group polyurethane, polypropylene, polystyrene, polyamide and acrylonitrile-butadienestyrene copolymer.

8. Spike according to one of Claims 1 to 7, that the elastomer of the thermoplastic vulcanisate is based on a rubber compound which contains as rubber(s) at least one of the rubbers from the group natural rubber (NR), synthetic polyisoprene (IR), polybutadiene (BR), styrene-butadiene rubber (SBR) and nitrile-butadiene rubber (NBR).

9. Pneumatic vehicle tyre comprising a tread with spike holes that are provided with spikes according to one or more of Claims 1 to 8.

## Revendications

1. Crampon (1, 1', 1") destiné à être ancré dans un trou de crampon d'une bande de roulement d'un pneumatique de véhicule, comprenant un corps de crampon (2, 2', 2") constitué d'une bride de base (4a, 4'a, 4"a) et d'une bride supérieure (5, 5', 5") et une pointe de crampon (3, 3', 3") faisant sailli hors de la bride supérieure (5, 5', 5"),
**caractérisé en ce que**
au moins la bride supérieure (5, 5', 5") du corps de crampon (2, 2', 2") se compose d'un vulcanisat thermoplastique constitué d'un plastique thermoplastique et d'au moins un élastomère.

2. Crampon selon la revendication 1, **caractérisé en ce que** le corps de crampon (2, 2') présente une partie de base (4, 4') qui présente la bride de base (4a, 4'a,) et un support de pointe (4b, 4'b) se trouvant à l'intérieur de la bride supérieure (5, 5'), dans lequel est ancrée au moins une partie de la portion de la pointe de crampon (3, 3') se trouvant à l'intérieur de la bride supérieure (5, 5').

3. Crampon selon la revendication 2, **caractérisé en ce que** la partie de base (4, 4') du corps de crampon (2, 2') se compose de métal, en particulier d'aluminium.

4. Crampon selon l'une quelconque des revendications 1 à 3, **caractérisé en ce que** la bride de base (4'a) est revêtue d'une couche d'enveloppe (6') qui se compose du vulcanisat thermoplastique de la bride supérieure (5').

5. Crampon selon la revendication 4, **caractérisé en ce que** la couche d'enveloppe (6') qui recouvre la bride de base (4'a) présente une épaisseur de 0,5 mm à 2,5 mm.

6. Crampon selon la revendication 1, **caractérisé en ce que** la bride de base (4"a) se compose également du vulcanisat thermoplastique.

7. Crampon selon l'une quelconque des revendications 1 à 6, **caractérisé en ce que** le plastique thermoplastique ou les plastiques thermoplastiques du vulcanisat thermoplastique provient ou proviennent du groupe du polyuréthane, du polypropylène, du polystyrène, du polyamide et d'un copolymère acrylonitrile-butadiène-styrène.

8. Crampon selon l'une quelconque des revendications 1 à 7, que l'élastomère du vulcanisé thermoplastique est issu d'un mélange de caoutchouc qui contient en tant que caoutchouc (s) au moins l'un des caoutchoucs du groupe du caoutchouc naturel (NR), du polyisoprène synthétique (IR), du polybutadiène (BR), du caoutchouc styrène-butadiène (SBR) et du caoutchouc nitrile-butadiène (NBR).

9. Pneumatique de véhicule comprenant une bande de roulement avec des trous de crampon qui sont pourvus de crampons selon l'une quelconque ou plusieurs des revendications 1 à 8.
